# EUROPÄISCHE PATENTSCHRIFT

(11) **EP 3 028 027 B1**
(45) Veröffentlichungstag und Bekanntmachung des Hinweises auf die Patenterteilung: **16.08.2017**
(21) Anmeldenummer: 14730081.8
(22) Anmeldetag: 10.06.2014
(51) Int. Cl.: G01M 13/02

(54) **ANORDNUNG, INSBESONDERE PRÜFANORDNUNG, MIT EINEM GETRIEBEMOTOR, EINER VOLLWELLE UND GETRIEBEN**
ARRANGEMENT, IN PARTICULAR TESTING DEVICE, HAVING A GEARED MOTOR, A SOLID SHAFT AND GEAR MECHANISMS
SYSTÈME, NOTAMMENT UN SYSTÈME DE CONTRÔLE, COMPORTANT UN MOTORÉDUCTEUR, UN ARBRE PLEIN ET DES TRAINS D'ENGRENAGES

(30) Priorität: 01.08.2013 DE 102013012720
(43) Veröffentlichungstag der Anmeldung: 08.06.2016
(73) Patentinhaber: SEW-EURODRIVE GmbH & Co. KG, 76646 Bruchsal (DE)
(72) Erfinder: HÜTTINGER, Alexander, 74245 Neulingen (DE); GANTNER, Martin, 68753 Waghäusel-Kirrlach (DE)
(86) Internationale Anmeldenummer: PCT/EP2014/001566
(87) Internationale Veröffentlichungsnummer: WO 2015/014422

(56) Entgegenhaltungen:
- DE-A1-102008 006 634
- DE-A1-102010 024 590
- DE-A1-102010 053 808

## Beschreibung

Die Erfindung betrifft eine Anordnung, insbesondere Prüfanordnung, mit einem Getriebemotor, einer Vollwelle und Getrieben.

Es ist allgemein bekannt, dass mittels eines Getriebemotors Getriebe antreibbar sind.

Aus der DE 10 2010 053 808 A1 ist als nächstliegender Stand der Technik ein Windkraftgetriebeprüfstand bekannt.

Aus der DE 10 2010 024 590 A1 ist ein Getriebe für einen Antriebsstrang eines Kraftwagens bekannt.

Aus der DE 10 2008 006 634 A1 ist ein Getriebeprüfstand bekannt.

Der Erfindung liegt daher die Aufgabe zugrunde, eine Anordnung, insbesondere Prüfanordnung, mit einem Getriebemotor, einer Vollwelle und Getrieben weiterzubilden, wobei ein einfacher und kostengünstiger Aufbau, insbesondere Prüfaufbau, realisierbar sein soll.

Erfindungsgemäß wird die Aufgabe bei der Anordnung, insbesondere Prüfanordnung, mit einem Getriebemotor, einer Vollwelle und Getrieben nach den in Anspruch 1 angegebenen Merkmalen gelöst.

Wichtige Merkmale der Erfindung bei der Anordnung, insbesondere Prüfanordnung, mit einem Getriebemotor, einer Vollwelle und Getrieben, insbesondere als Prüflinge fungierenden Getrieben, sind dass jedes Getriebe eine Hohlwelle, insbesondere eine durch das Getriebe durchgehende Hohlwelle, aufweist,
wobei jedes Getriebe eine weitere Welle aufweist, insbesondere eintreibende Welle,
wobei die Vollwelle mit den Hohlwellen der Getriebe jeweils drehfest verbunden ist,
wobei ein erstes der Getriebe einen Drehmomentfluss von der weiteren Welle zur Hohlwelle aufweist, insbesondere also eintreibend betrieben ist,
wobei die anderen Getriebe jeweils einen Drehmomentfluss von ihrer jeweiligen Hohlwelle zu ihrer jeweiligen weiteren Welle aufweisen, insbesondere also jeweils rücktreibend betrieben sind.

Von Vorteil ist dabei, dass eine Mehrzahl gleichartiger Getriebe prüfbar sind, wobei sich die Getriebe in ihren Übersetzungen unterscheiden dürfen. Wichtig ist jedoch, dass alle Getriebe eine durchgehende Hohlwelle aufweisen, durch welche die Vollwelle hindurchführbar ist und mit den Hohlwellen drehfest verbindbar ist. Vorzugsweise weisen alle Hohlwellen denselben lichten Innendurchmesser auf. Ein erstes der Getriebe ist eintreibend, die anderen rücktreibend betreibbar. Somit ist das erste Getriebe zum Zuführen des Drehmomentflusses an die Vollwelle vorgesehen, wobei der Drehmomentfluss von der Vollwelle sich verzweigt und/oder verteilt auf die anderen Getriebe. Erfingdungsgemäß ist die Vollwelle mit der jeweiligen Hohlwelle mittels jeweiliger Schrumpfscheibe kraftschlüssig verbunden. Von Vorteil ist dabei, dass eine einfache kostengünstige Verbindung ausführbar ist. Erfindungsgemäß ist jedes Getriebe zumindest teilweise mit Schmieröl befüllt. Von Vorteil ist dabei, dass mittels des Betreibens der Anordnung die Dichtheit der Getriebe prüfbar ist. Erfindungsgemäß ist jeweils die Hohlwelle gegen ein Gehäuseteil des jeweiligen Getriebes mittels eines oder mehrere Wellendichtringe abgedichtet,
wobei der Wellendichtring an einem entsprechenden Sitz im Gehäuseteil aufgenommen ist und eine Dichtlippe des Wellendichtrings auf der Hohlwelle läuft. Von Vorteil ist dabei, dass die Funktion der Wellendichtringe mit der Anordnung überprüfbar ist. Erfindungsgemäß ist jeweils die weitere Welle gegen ein Gehäuseteil des jeweiligen Getriebes mittels eines Wellendichtrings abgedichtet,
wobei der Wellendichtring an einem entsprechenden Sitz im Gehäuseteil aufgenommen ist und eine Dichtlippe des Wellendichtrings auf der weiteren Welle läuft. Von Vorteil ist dabei, dass ein kostengünstiger Wellendichtring vorsehbar ist und seine Funktion überprüfbar ist. Erfingdungsgemäß zentriert ein Außenring des Lagers der weiteren Welle ein Deckelteil gegen das Gehäuseteil, wobei das Deckelteil eine Ausnehmung des Gehäuseteils verschließt. Von Vorteil ist dabei, dass der Außenring des Lagers nicht nur das Einfügen des Lagers in den Sitz bewirkt sondern auch ein anderes Teil zentriert.

Bei einer vorteilhaften Ausgestaltung weist das Gehäuseteil (3) eine Bohrung zum Auslass von Leckage-Öl auf. Von Vorteil ist dabei, dass die Öl-Leckage einfach beobachtbar ist, indem das auftretende Öl beobachtet oder von einem Sensor detektiert wird.

Bei einer vorteilhaften Ausgestaltung ist eine Wanne vorgesehen zum Sammeln von Leckage-Öl. Von Vorteil ist dabei, dass die Umwelt geschützt ist vor Leckage-Öl

Bei einer vorteilhaften Ausgestaltung ist die eintreibende Welle von einem Getriebemotor angetrieben. Von Vorteil ist dabei, dass ein regelbarer Antrieb einsetzbar ist. Insbesondere ist der Getriebemotor umrichtergespeist und somit drehzahlregelbar ausführbar.

Die Erfindung wird nun anhand von Abbildungen näher erläutert:

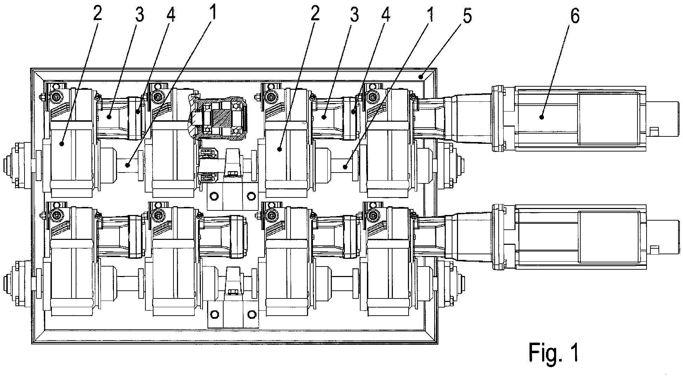

In der Figur 1 ist ein schematischer Aufbau einer erfindungsgemäßen Anordnung, insbesondere Prüfstand, in Draufsicht gezeigt, wobei eines der dort dargestellten Getriebe teilweise angeschnitten dargestellt ist.

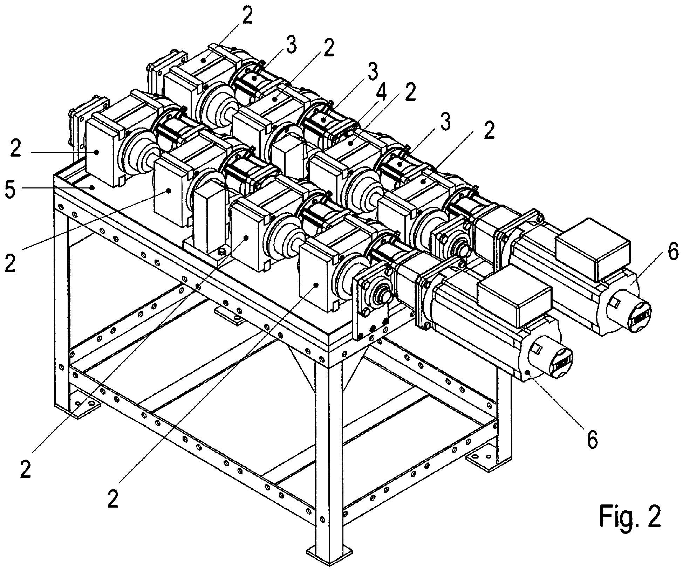

In der Figur 2 ist eine zugehörige Schrägansicht gezeigt.
In der Figur 3 sind die angeschnittenen Bereiche vergrößert dargestellt.

Wie in den Figuren dargestellt, weist die Anordnung mehrere Getriebe auf, deren Abtriebswellen jeweils als Hohlwelle 34 ausgeführt sind. Diese Hohlwelle 34 ist mittels einer Schrumpfscheibe 33 mit einer durch die Hohlwellen 34 der mehreren Getriebe durchgehenden Vollwelle 1 kraftschlüssig verbunden.

Die Getriebe weisen jeweils dasselbe Gehäuseteil 2 auf, welches die Verzahnungsteile des Getriebes umgibt, und weisen entweder dieselbe Übersetzung zwischen eintreibender Welle und abtreibender Welle, also Hohlwelle 34, auf oder es sind jeweils verschiedene Übersetzungen vorgesehen.

Die abtreibende Welle, also Hohlwelle 34, weist einen Wellenabschnitt auf, der einen größeren Durchmesser aufweist als jeder Wellenabschnitt der eintreibenden Welle.

In Wellenachsrichtung der Vollwelle 1 sind also die Hohlwellen 34 beabstandet voneinander seriell hintereinander aufgereiht angeordnet.

Ein erstes der mit der Vollwelle 1 verbundenen Getriebe wird an seiner Eintriebswelle 35 von einem Getriebemotor 6 angetrieben. Dieses erste Getriebe ist also eintreibend angetrieben.

Die weiteren mit der Vollwelle 1 verbundenen Getriebe sind rücktreibend betrieben. Denn die Vollwelle 1 treibt jeweils die Hohlwelle 34 des jeweiligen Getriebes an, also die in anderer Verwendung abtreibende Welle des jeweiligen Getriebes. Die eintreibenden Wellen 35 dieser rücktreibend betriebenen Getriebe sind beim Ausführungsbeispiel also mittels der jeweiligen Hohlwelle 34 angetrieben. Die eintreibenden Wellen 35 dieser rücktreibend betriebenen Getriebe treiben keine Last an, drehen also frei.

Die Getriebe sind schmierölbefüllt und weisen daher eintriebsseitig und abtriebsseitig jeweils einen Wellendichtring auf. Da die abtreibende Welle, also Hohlwelle 34, durchgehend durch das Getriebe ausgeführt ist, weist sie sogar beidseitig einen Wellendichtring auf.

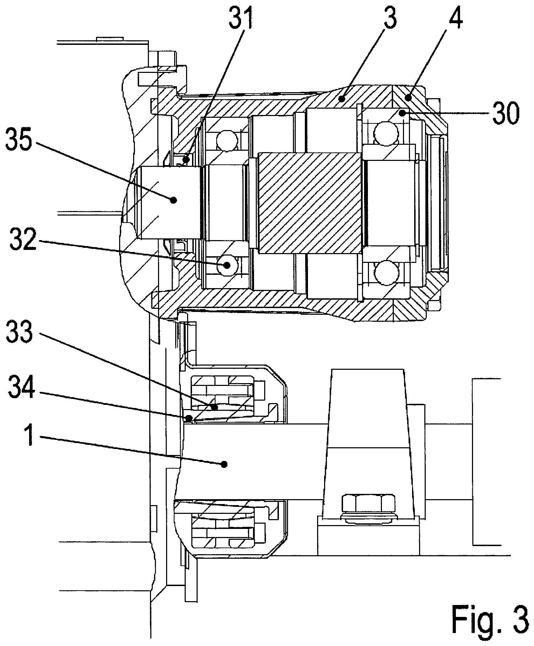

In Figur 3 ist der eintriebsseitige Wellendichtring 31 dargestellt, welcher die eintreibende Welle 35 gegen ein Gehäuseteil 3 abdichtet, das zwei Ausnehmungen aufweist. Die erste der Ausnehmungen wird von einem Deckelteil 4 verschlossen und die zweite Ausnehmung von einem Gehäuseteil 2, welches Lagersitze zur Aufnahme von Lagern aufweist, über welche die Hohlwelle 34 gelagert ist im Gehäuseteil 2.

Die Anordnung stellt einen Prüfstand für Getriebe dar, die nach der Prüfung oder deren baugleiche Kopien in anderen Anlagen und Maschinen verwendet werden, wobei sie eintreibend, also nicht rücktreibend, verwendet werden.

Die Lager (30, 32) der eintreibenden Welle sind fett geschmiert und daher nicht im Schmierölbereich angeordnet.

Das Gehäuseteil 3 weist eine Bohrung auf, die als Ölauslauf fungiert. Wenn also der Wellendichtring 31 versagt, läuft das aus dem Schmierölraumbereich des Getriebes austretende Öl über diese Bohrung nach unten aus und sammelt sich in der Wanne 5.

Die Anordnung umfasst auch eine weitere Vollwelle 1, mit der Hohlwellen 34 von Getrieben kraftschlüssig verbunden sind. Das erste der Getriebe wird wiederum eintreibend betrieben, also mit Drehmomentfluss von der eintreibenden Welle zur abtreibenden Welle. Die anderen Getriebe sind rückwirkend betrieben.

Somit sind die Dichtheit der Wellendichtringe überprüfbar bei der von dem Getriebemotor bewirkten jeweiligen Drehzahl der jeweiligen eintreibenden Welle von der Anordnung. Denn sobald austretendes Öl detektiert wird, ist die Undichtheit des jeweiligen Wellendichtrings erkennbar.

Die Hohlwelle 34 ist an ihrem Endbereich mit Innenkonus ausgeführt, so dass eine konische Ringscheibe, zwischen der zumindest im unter dem innenkonischen Wellenabschnitt liegenden Beriech zylindrisch ausgeführten Vollwelle 1 und Hohlwelle 34 geschoben wird und deren Konuswinkel dem Konuswinkel des Innenkonus entspricht.

Eine Schrumpfscheibe 33 wird am äußeren Bereich der Hohlwelle 34 angeordnet und von zwei Pressringen an die Hohlwelle 34 angeschrumpft. Die Pressringe weisen dabei ebenfalls eine innenkonische Kontur auf, die an einer entsprechend außenkonischen Kontur der Schrumpfscheibe 33 anliegen. Mittels einer Schraube ist der axiale Abstand der Pressringe zueinander verringerbar und somit das Aufschrumpfen verstärkbar, da die konischen Bereiche der beiden Pressringe zueinander axial spiegelsymmetrisch ausgerichtet sind.

### Bezugszeichenliste

- 1: Vollwelle
- 2: erstes Gehäuseteil
- 3: zweites Gehäuseteil
- 4: Deckelteil
- 5: Wanne, insbesondere Ölwanne
- 6: Getriebemotor
- 30: Lager
- 31: Wellendichtring
- 32: Lager
- 33: Schrumpfscheibe
- 34: Hohlwelle
- 35: eintreibende Welle

## Patentansprüche

1. Anordnung, insbesondere Prüfanordnung, mit einem Getriebemotor (6), einer Vollwelle (1) und Getrieben, insbesondere als Prüflinge fungierenden Getrieben,
wobei jedes Getriebe eine Hohlwelle (34), insbesondere eine durch das Getriebe durchgehende Hohlwelle (34), aufweist,
wobei jedes Getriebe eine weitere, eintreibende Welle (35) aufweist, wobei die Vollwelle (1) mit den Hohlwellen (34) der Getriebe jeweils drehfest verbunden ist,
wobei ein erstes der Getriebe einen Drehmomentfluss von der weiteren Welle (35) zur Hohlwelle (34) aufweist, also eintreibend betreibar ist,
wobei die anderen Getriebe jeweils einen Drehmomentfluss von ihrer jeweiligen Hohlwelle (34) zu ihrer jeweiligen weiteren Welle (35) aufweisen, also jeweils rücktreibend betreibar sind,
**dadurch gekennzeichnet, dass**
die weiteren Wellen (35) dieser rücktreibend betriebenen Getriebe frei drehbar sind, also keine Last antreiben, wobei die Vollwelle (1) mit der jeweiligen Hohlwelle (34) mittels einer jeweiligen Schrumpfscheibe (33) kraftschlüssig verbunden ist,
wobei jedes Getriebe zumindest teilweise mit Schmieröl befüllt ist,
wobei jeweils die Hohlwelle (34) gegen ein Gehäuseteil des jeweiligen Getriebes mittels eines oder mehrere Wellendichtringe abgedichtet ist,
wobei der Wellendichtring (31) an einem entsprechenden Sitz im Gehäuseteil aufgenommen ist und eine Dichtlippe des Wellendichtrings (31) auf der Hohlwelle (34) läuft,
wobei jeweils die weitere Welle (35) gegen ein Gehäuseteil (3) des jeweiligen Getriebes mittels eines Wellendichtrings (31) abgedichtet ist,
wobei der Wellendichtring (31) an einem entsprechenden Sitz im Gehäuseteil (3) aufgenommen ist und eine Dichtlippe des Wellendichtrings (31) auf der weiteren Welle (35) läuft,
wobei ein Außenring des Lagers (30) der weiteren Welle (35) ein Deckelteil (4) gegen das Gehäuseteil (1, 2) (3) zentriert, wobei das Deckelteil (4) eine Ausnehmung des Gehäuseteils (3) verschließt.

2. Anordnung nach Anspruch 1,
**dadurch gekennzeichnet, dass**
das Gehäuseteil (3) eine Bohrung zum Auslass von Leckage-Öl aufweist.

3. Anordnung nach mindestens einem der vorangegangenen Ansprüche,
**dadurch gekennzeichnet, dass**
eine Wanne (5) vorgesehen ist zum Sammeln von Leckage-Öl.

4. Anordnung nach mindestens einem der vorangegangenen Ansprüche,
**dadurch gekennzeichnet, dass**
die eintreibende Welle (35) von einem Getriebemotor (6) angetrieben ist.

## Claims

1. Arrangement, in particular testing arrangement, having a geared motor (6), a solid shaft (1) and gear mechanisms, in particular gear mechanisms functioning as test specimens, wherein each gear mechanism has a hollow shaft (34), in particular a hollow shaft (34) which passes through the gear mechanism,
wherein each gear mechanism has a further, input shaft (35), wherein the solid shaft (1) is in each case rotatably fixedly connected to the hollow shafts (34) of the gear mechanisms, wherein a first of the gear mechanisms has a torque flow from the further shaft (35) to the hollow shaft (34), that is to say can be operated as an input gear mechanism,
wherein the other gear mechanisms each have a torque flow from their respective hollow shaft (34) to their respective further shaft (35), that is to say can each be operated in a retrodriving fashion,
**characterized in that**
the further shafts (35) of these gear mechanisms operated in a retrodriving fashion are freely rotatable, that is to say do not drive any load,
wherein the solid shaft (1) is connected in a force-fitting manner to the respective hollow shaft (34) by means of a respective shrink disc (33),
wherein each gear mechanism is at least partially filled with lubricating oil,
wherein in each case the hollow shaft (34) is sealed off with respect to a housing part of the respective gear mechanism by means of one or more shaft sealing rings,
wherein the shaft sealing ring (31) is accommodated on a corresponding seat in the housing part and a sealing lip of the shaft sealing ring (31) runs on the hollow shaft (34),
wherein in each case the further shaft (35) is sealed off with respect to a housing part (3) of the respective gear mechanism by means of a shaft sealing ring (31),
wherein the shaft sealing ring (31) is accommodated on a corresponding seat in the housing part (3) and a sealing lip of the shaft sealing ring (31) runs on the further shaft (35), wherein an outer ring of the bearing (30) of the further shaft (35) centres a cover part (4) with respect to the housing part (1, 2) (3), wherein the cover part (4) closes a recess of the housing part (3).

2. Arrangement according to claim 1,
**characterized in that**
the housing part (3) has a bore for the outlet of leakage oil.

3. Arrangement according to at least one of the preceding claims,
**characterized in that**
a trough (5) is provided for collecting leakage oil.

4. Arrangement according to at least one of the preceding claims,
**characterized in that**
the input shaft (35) is driven by a geared motor (6).

## Revendications

1. Dispositif, notamment dispositif de contrôle comprenant un moteur (6) à engrenages, un arbre plein (1) et des transmissions, notamment des transmissions faisant fonction d'éprouvettes,
chaque transmission étant pourvue d'un arbre creux (34), en particulier d'un arbre creux (34) parcourant ladite transmission en continu,
chaque transmission étant dotée d'un arbre supplémentaire d'entrée (35),
ledit arbre plein (1) étant respectivement verrouillé en rotation avec les arbres creux (34) des transmissions,
une première desdites transmissions présentant un flux de couple partant dudit arbre supplémentaire (35) et gagnant ledit arbre creux (34), de sorte qu'elle peut être actionnée en mode menant,
les autres transmissions présentant, à chaque fois, un flux de coupe partant de leur arbre creux (34) respectif et gagnant leur arbre supplémentaire (35) respectif, de sorte qu'elles peuvent être respectivement actionnées en mode entraînement inversé,
**caractérisé par le fait que**
les arbres supplémentaires (35) de ces transmissions actionnées en mode entraînement inversé peuvent tourner librement, c'est-à-dire n'entraînent aucune charge,
sachant que l'arbre plein (1) est relié par engagement positif à l'arbre creux (34) respectif, au moyen d'une frette de serrage (33) respective,
sachant que chaque transmission est au moins partiellement emplie d'huile lubrifiante, sachant que l'étanchéité de l'arbre creux (34) est assurée à chaque fois, par rapport à une partie du carter de la transmission considérée, au moyen d'une ou plusieurs bague(s) d'étanchement dudit arbre,
sachant que la bague (31) d'étanchement dudit arbre est mise en place sur un siège correspondant, ménagé dans ladite partie du carter, et qu'une lèvre d'étanchement de ladite bague d'étanchement (31) repose sur ledit arbre creux (34),
sachant que l'étanchéité de l'arbre supplémentaire (35) est assurée à chaque fois, par rapport à une partie (3) du carter de la transmission considérée, au moyen d'une bague (31) d'étanchement dudit arbre,
sachant que ladite bague (31) d'étanchement dudit arbre est mise en place sur un siège correspondant, ménagé dans ladite partie (3) du carter, et qu'une lèvre d'étanchement de ladite bague d'étanchement (31) repose sur ledit arbre supplémentaire (35),
sachant qu'une bague extérieure du palier (30) dudit arbre supplémentaire (35) centre une partie (4), formant couvercle, par rapport à la partie (1, 2) (3) du carter, ladite partie (4), formant couvercle, occultant un évidement de ladite partie (3) du carter.

2. Dispositif selon la revendication 1,
**caractérisé par le fait que**
la partie (3) du carter comporte un alésage dédié à la sortie d'huile de fuite.

3. Dispositif selon au moins l'une des revendications précédentes,
**caractérisé par le fait**
**qu'**un bac (5) est prévu pour la collecte d'huile de fuite.

4. Dispositif selon au moins l'une des revendications précédentes,
**caractérisé par le fait que**
l'arbre d'entrée (35) est entraîné par un moteur (6) à engrenages.
